# EUROPÄISCHE PATENTSCHRIFT

(11) **EP 1 616 399 B1**
(45) Veröffentlichungstag und Bekanntmachung des Hinweises auf die Patenterteilung: **01.08.2007**
(21) Anmeldenummer: 04718622.6
(22) Anmeldetag: 09.03.2004
(51) Int. Cl.: H04B 11/00, G01S 15/89, H04R 1/44

(54) **VORRICHTUNG ZUM SENDEN UND EMPFANGEN VON SCHALLWELLEN**
DEVICE FOR TRANSMITTING AND RECEIVING SOUND WAVES
DISPOSITIF POUR EMETTRE ET RECEVOIR DES ONDES SONORES

(30) Priorität: 24.04.2003 DE 10318561
(43) Veröffentlichungstag der Anmeldung: 18.01.2006
(73) Patentinhaber: ATLAS ELEKTRONIK GMBH, D-28305 Bremen (DE)
(72) Erfinder: PRENDEL, Peter, 28844 Weyhe (DE)
(86) Internationale Anmeldenummer: PCT/EP2004/002368
(87) Internationale Veröffentlichungsnummer: WO 2004/095741

(56) Entgegenhaltungen:
- US-A- 3 613 068
- US-A- 4 980 868

## Beschreibung

Die Erfindung betrifft eine Vorrichtung zum Senden und Empfangen von im Wasser sich ausbreitenden Schallwellen der im Oberbegriff des Anspruchs 1 definierten Gattung.

Eine bekannte Vorrichtung dieser Art (US 4 980 868 A1) weist einen elektroakustischen Wandler auf, der abhängig von einem im zugeführten elektrischen Signal akustische Energie in das Umgebungsmedium aussendet und abhängig von einem aus dem Umgebungsmedium empfangenen akustischen Signal ein elektrisches Ausgangssignal generiert. Der Ein-/Ausgang des Wandlers ist mit einer sog. Weiche, hier einem Sende-/Empfangsschalter, verbunden, der verhindert, dass das elektrische Sendesignal des Senders an den Empfänger gelangt, wenn der Wandler das akustische Signal ins Umgebungsmedium aussendet. Der Sende-/Empfangsschalter hat einen Signaleingang, der mit einem Sendeverstärker verbunden ist, und einen Signalausgang, der mit einem Empfangsverstärker verbunden ist.

Eine weitere bekannte Vorrichtung dieser Art ist aus US-A-3 613 068 Getrennt.

Zum Zwecke einer akustischen Unterwasser-Datenübertragung, z.B. bei der Unterwasser-Telefonie, werden Wandler mit einem breiten Arbeits-Frequenzbereich benötigt. Solche Wandlertypen sind beispielsweise sog. Composite-Wandler, die recht hochohmig sind und nur über eine geringe aktive Wandlerkapazität verfügen. Zur Erzeugung einer hohen akustischen Ausgangsleistung mit diesen Wandlern muss sendeseitig eine sehr hohe Spannung von mehreren Kilovolt zur Verfügung gestellt werden. Im Empfangsbetrieb stehen dagegen nur geringe Ausgangsspannungen am Wandler zur Verfügung, die im Mikro- oder Millivoltbereich liegen. Bei solch geringen Signalspannungen ist der Einsatz von Schaltkontakten problematisch, so dass für den Sende- und Empfangsbetrieb getrennte Wandler eingesetzt werden, die jeweils ausschließlich als Sendewandler bzw. als Empfangswandler (Hydrofone) betrieben werden.

Der Erfindung liegt die Aufgabe zugrunde, eine Vorrichtung der eingangs genannten Art anzugeben, in der auch hochohmige elektroakustische Wandler mit geringer aktiver Wandlerkapazität, wie sie von sog. Composite-Wandlern repräsentiert werden, im Sende- und Empfangsmodus betrieben werden können.

Die Aufgabe ist erfindungsgemäße durch die Merkmale im Anspruch 1 gelöst.

Die erfindungsgemäße Vorrichtung zum Aussenden und Empfangen von Schallwellen hat den Vorteil, dass im Sendebetrieb durch die Subtraktion der in den zweiten Wicklungen von erstem und zweitem Transformator erzeugten, annähernd gleich großen Spannungen die Spannung zwischen den freien Wicklungsenden der beiden in Reihe geschalteten zweiten Wicklungen etwa Null ist und dadurch in der zweiten Wicklung des ersten Transformators keine Verlustleistung entsteht, die in Anbetracht der hohen Speisespannung ohne zweite Wicklung des zweiten Transformators sehr groß wäre und vom Sendeverstärker aufgebracht werden müsste. Im Empfangsbetrieb wird durch die kurzgeschlossene dritte Wicklung des zweiten Transformators eine Gegeninduktion erzeugt, die den im Empfangsmodus störenden, reaktiven Widerstand der zweiten Wicklung des zweiten Transformators sehr klein werden lässt, so dass im Empfangsmodus fast die volle Empfangsspannung an der zweiten Wicklung des ersten Transformators zur Auswertung im Empfänger zur Verfügung steht.

Die erfindungsgemäße Vorrichtung vermeidet dabei im Sendebetrieb prinzipiell eine Rückbelastung des Sendesignalgenerators durch die Gegenspannung im parallelen Empfangszweig und weitgehend Verlustleistung im Empfangszweig und bietet einen Überspannungsschutz des Empfangszweigs. Die durch die Erfindung geschaffene Möglichkeit, denselben Wandler zum Senden und Empfangen zu verwenden, spart vor allem Platz an der mechanischen Montagestelle, so dass diese Vorrichtung vorteilhaft in baukleinen Geräten eingesetzt werden kann.

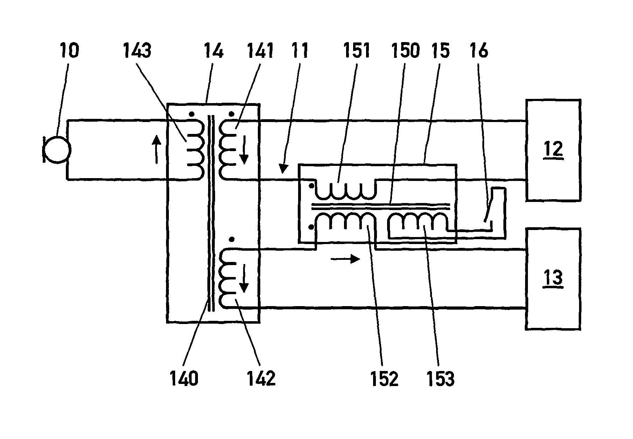

Die Erfindung ist anhand eines in der Zeichnung dargestellten Ausführungsbeispiels im folgenden näher beschrieben. Dabei zeigt die Zeichnung ein Schaltbild einer Vorrichtung zum Senden und Empfangen von Schallwellen.

Die in der Zeichnung im Schaltbild dargestellte Sende- und Empfangsvorrichtung für Unterwasserschallanwendung weist einen elektroakustischen Wandler 10 auf, der vorzugsweise ein sog. Composite-Wandler ist und sowohl im Sendemodus zum Aussenden von Schallwellen als auch im Empfangsmodus zum Empfang von Schallwellen betrieben wird. Mittels einer sog. elektrischen Weiche 11 ist der Wandler 10 im Sendebetrieb an einem Sender 12 und im Empfangsbetrieb an einem Empfänger 13 angeschlossen. Wie nicht weiter dargestellt ist, weist der Sender 12 in bekannter Weise einen Sendegenerator zur Erzeugung eines elektrischen Sendesignals auf, das über einen Sendeverstärker an den Wandler 10 gelegt wird. Der Empfänger 13 weist einen Empfangsverstärker und eine Signalverarbeitungseinheit auf. Im Empfangsbetrieb wird das am Wandler 10 abgenommene elektrische Signal im Empfangsverstärker verstärkt und in der Signalverarbeitung ausgewertet.

Die elektrische Weiche 11 umfasst einen ersten Transformator 14 und einen zweiten Transformator 15 mit jeweils drei Wicklungen. Alle Wicklungen sind auf einem Transformatorkern 140 bzw. 150 aufgewickelt, so die erste Wicklung 141, die zweite Wicklung 142 und die dritte Wicklung 143 des ersten Transformators 14 auf dem Transformatorkern 140 und die erste Wicklung 151, die zweite Wicklung 152 und die dritte Wicklung 153 des zweite Transformators 15 auf dem Transformatorkern 150. Die ersten Wicklungen 141 und 151 der beiden Transformatoren 14, 15 sind in Reihe geschaltet und an den Sendeverstärker des Senders 12 angeschlossen. Die zweiten Wicklungen 142 und 152 der beiden Transformatoren 14, 15 sind ebenfalls in Reihe geschaltet und an dem Empfangsverstärker des Empfängers 13 angeschlossen. Die beiden zweiten Wicklungen 142, 152 weisen eine gleiche Windungszahl auf, sind aber auf ihren Transformatorkernen 140 bzw. 150 gegensinnig aufgewickelt, so dass die an ihnen erzeugten Spannungen einander entgegengerichtet sind. Die Spannungsrichtungen sind in der Zeichnung mit an den Wicklungen dargestellten Pfeilen gekennzeichnet. Die erste Wicklung 141 des erste Transformators 14 weist die gleiche Windungszahl auf, wie die zweiten Wicklungen 142 und 152 vom ersten und zweiten Transformator 14, 15. Die dritte Wicklung 143 des erste Transformators 14 ist mit dem elektroakustischen Wandler 10 verbunden, während die dritte Wicklung 153 des zweiten Transformators 15 mit ihren beiden Wicklungsenden an einem elektrisch oder elektronisch gesteuerten Schalter 16 angeschlossen ist. Mit Schließen des Schalters 16 ist die dritte Wicklung 153 kurzgeschlossen.

Im Sendebetrieb wird die von dem Wandler 10 benötigte hohe Sendespannung im ersten Transformator 14 erzeugt, und zwar durch Speisung der ersten Wicklung 141 aus dem Leistungsverstärker des Senders 12. An der zweiten Wicklung 152 des zweiten Transformators 15 liegt die gleiche Spannung an wie an der ersten Wicklung 141 des ersten Transformators 14 an. Im ersten Transformator 14 wird in der zweiten Wicklung 142 und in dem zweiten Transformator 15 wird in der zweiten Wicklung 152 jeweils eine Spannung erzeugt. Aufgrund der gleichen Windungszahlen der ersten Wicklung 141 und der zweiten Wicklung 142 des ersten Transformators 14 sowie der zweiten Wicklung 152 des zweiten Transformators 15 sind die erzeugten Spannungen gleich groß, aber einander entgegengerichtet. Zwischen den an den Empfänger 13 angeschlossenen beiden Wicklungsenden der zweiten Wicklungen 142 und 152 der beiden Transformatoren 14, 15 ist damit die Spannung annähernd Null, so dass durch die Spannungsinduzierung in der zweiten Wicklung 142 des ersten Transformators 14 keine Verlustleistung anfällt. Im Sendebetrieb ist der Schalter 16, wie in der Zeichnung dargestellt, geöffnet.

Im Empfangsbetrieb ist der Schalter 16 geschlossen und die dritte Wicklung 153 des zweiten Transformators 15 kurzgeschlossen. Das am Ausgang des Wandlers 10 abgenommene Ausgangssignal erzeugt im ersten Transformator 14 eine Signalspannung an der zweiten Wicklung 142, die in Reihe mit der zweiten Wicklung 152 des zweiten Transformators 15 an dem Empfänger 13 angeschlossen ist. Die zweite Wicklung 152 des zweiten Transformators 15 stellt im Empfangsbetrieb einen hinderlichen, reaktiven Widerstand dar, der jedoch durch die in der kurzgeschlossenen dritten Wicklung 153 erzeugte Gegeninduktion kompensiert wird. Auf diese Weise steht fast die volle Ausgangs- oder Empfangsspannung des Wandlers 10 im Empfänger 13 für die Signalverarbeitung zur Verfügung.

## Patentansprüche

1. Vorrichtung zum Senden und Empfangen von im Wasser sich ausbreitenden Schallwellen, mit einem elektroakustischen Wandler (10) und mit einer elektrischen Weiche (11) zum Aufprägen eines elektrischen Sendesignals auf den Wandler (10) im Sendebetrieb und zum Abnehmen eines elektrischen Empfangssignals vom Wandler (10) im Empfangsbetrieb, **dadurch gekennzeichnet, dass** die Weiche (11) einen ersten Transformator (14) mit einer ersten Wicklung (141) für den Sendebetrieb, einer zweiten Wicklung (142) für den Empfangsbetrieb und einer an dem Wandler (10) angeschlossenen dritten Wicklung (143) und einen zweiten Transformator (15) mit einer zu der ersten Wicklung (141) des ersten Transformators (14) in Reihe liegenden ersten Wicklung (151), einer mit der zweiten Wicklung (142) des ersten Transformators (14) in Reihe liegenden zweiten Wicklung (152) und einer mit Mitteln zum Kurzschließen verbundenen dritten Wicklung (153) aufweist, dass die erste und zweite Wicklung (151, 152) des zweiten Transformators (15) so ausgelegt sind, dass im Sendebetrieb an der zweiten Wicklung (152) des zweiten Transformators (15) eine Spannung erzeugt wird, die etwa gleich der in der zweiten Wicklung (142) des ersten Transformators (14) erzeugten Spannung, aber dieser entgegengerichtet ist, und dass im Empfangsbetrieb die dritte Wicklung (153) des zweiten Transformators (15) kurzgeschlossen und im Sendebetrieb deren Kurzschluss aufgehoben ist.

2. Vorrichtung nach Anspruch 1, **dadurch gekennzeichnet, dass** die erste und zweite Wicklung (141, 142) des ersten Transformators (14) sowie die zweite Wicklung (152) des zweiten Transformators (15) gleiche Windungszahlen aufweisen.

3. Vorrichtung nach Anspruch 1 oder 2, **dadurch gekennzeichnet, dass** die Kurzschlussmittel einen elektrischen oder elektronisch gesteuerten Schalter (16) aufweisen, der an den beiden Wicklungsenden der dritten Wicklung (153) des zweiten Transformators (15) angeschlossen ist.

## Claims

1. Device for transmitting and receiving sound waves propagating in water, having an electroacoustic transducer (10) and having an electrical switch (11) for impressing an electrical transmit signal on the transducer (10) in transmit mode, and for tapping an electrical receive signal from the transducer (10) in receive mode, **characterized in that** the switch (11) has a first transformer (14) with a first winding (141) for the transmit mode, a second winding (142) for the receive mode and a third winding (143) connected to the transducer (10), and a second transformer (15) with a first winding (151) in series with the first winding (141) of the first transformer (14), a second winding (152) in series with the second winding (142) of the first transformer (14), and a third winding (153) connected to means of short-circuiting, **in that** the first and second windings (151, 152) of the second transformer (15) are designed such that in transmit mode there is generated at the second winding (152) of the second transformer (15) a voltage which is approximately equal to, but opposite to the voltage generated in the second winding (142) of the first transformer (14), and **in that** the third winding (153) of the second transformer (15) is short-circuited in receive mode, and its short circuit is cancelled in transmit mode.

2. Device according to Claim 1, **characterized in that** the first and second winding (141, 142) of the first transformer (14), and the second winding (152) of the second transformer (15) have equal numbers of turns per unit length.

3. Device according to Claim 1 or 2, **characterized in that** the short-circuiting means have an electrically or electronically controlled switch (16) which is connected at the two winding ends of the third winding (153) of the second transformer (15).

## Revendications

1. Dispositif pour émettre et recevoir des ondes sonores se propageant dans l'eau, avec un convertisseur électro-acoustique (10) et avec un aiguillage électrique (11) pour appliquer un signal d'émission électrique au convertisseur (10) en régime d'émission et pour récupérer un signal de réception électrique du convertisseur (10) en régime de réception, **caractérisé en ce que** l'aiguillage (11) comporte un premier transformateur (14) avec un premier bobinage (141) pour le régime d'émission, un deuxième bobinage (142) pour le régime de réception, et un troisième bobinage (143) raccordé au convertisseur (10), et un deuxième transformateur (15) avec un premier bobinage (151) en série avec le premier bobinage (141) du premier transformateur (14), un deuxième bobinage (152) en série avec le deuxième bobinage (142) du premier transformateur (14) et un troisième bobinage (153) raccordé à des moyens de court-circuit, **en ce que** le premier et le deuxième bobinage (151, 152) du deuxième transformateur (15) sont conçus de telle sorte qu'en régime d'émission une tension est générée sur le deuxième bobinage (152) du deuxième transformateur (15), qui est à peu prêt identique à la tension générée dans le deuxième bobinage (142) du premier transformateur (14) mais de sens opposé, et **en ce qu'**en régime de réception, le troisième bobinage (153) du deuxième transformateur (15) est en court-circuit et qu'en régime d'émission, son court-circuit est enlevé.

2. Dispositif selon la revendication 1, **caractérisé en ce que** le premier et le deuxième bobinage (141, 142) du premier transformateur (14) ainsi que le deuxième bobinage (152) du deuxième transformateur (15) comportent le même nombre de spires.

3. Dispositif selon la revendication 1 ou 2, **caractérisé en ce que** les moyens de court-circuit comportent un interrupteur (16) à commande électrique ou électronique, raccordé aux deux extrémités du troisième bobinage (153) du deuxième transformateur (15).
